# EUROPEAN PATENT APPLICATION

(11) **EP 4 625 663 A1**
(43) Date of publication of application: **01.10.2025**
(21) Application number: 23924958.4
(22) Date of filing: 26.10.2023
(51) Int. Cl.: H01M 50/342, H01M 50/367, H01M 50/383

(54) **BATTERY PACK**

(30) Priority: 01.03.2023 CN 202320455775 U
(71) Applicant: BYD Company Limited, Shenzhen, Guangdong 518118 (CN)
(72) Inventor: ZHOU, Dongjie, Shenzhen, Guangdong 518118 (CN); YU, Peiwen, Shenzhen, Guangdong 518118 (CN); YI, Ning, Shenzhen, Guangdong 518118 (CN)
(74) Representative: Taor, Simon Edward William
(86) International application number: PCT/CN2023/126774
(87) International publication number: WO 2024/179004

(57) **Abstract**

A battery pack includes a battery box, battery cells, and a mica protection plate. The battery box has accommodation space inside, and an air exhaust passage is provided at a bottom of the battery box. The battery cells are disposed in the accommodation space, there are a plurality of battery cells, and the plurality of battery cells are arranged in sequence in a length direction of the air exhaust passage. An explosion-proof valve is disposed at a bottom of the battery cell, and the explosion-proof valve corresponds to the air exhaust passage. The mica protection plate is disposed between the explosion-proof valve and the air exhaust passage.

## Description

### CROSS-REFERENCE TO RELATED APPLICATIONS

This application claims priority to Chinese Patent Application No. 202320455775.2, filed with the China National Intellectual Property Administration on March 1, 2023 and entitled "BATTERY PACK", which is incorporated herein by reference in its entirety.

### TECHNICAL FIELD

The present disclosure relates to the field of battery pack technologies, and in particular, to a battery pack.

### BACKGROUND

With development of science and technology, an explosion-proof valve is usually disposed in a battery. The explosion-proof valve and a battery post are jointly disposed on an end-part cover of the battery. A positive electrode and a negative electrode of the battery are interconnected with a high voltage through a connecting plate, and a BMS sampling point is usually provided on the connecting plate. When a battery experiences thermal runaway under an extreme working condition, a high-temperature and high-pressure substance generated inside the battery breaks open the explosion-proof valve for timely pressure relief, to ensure that the battery and a battery pack do not catch fire or explode.

In a conventional technology, the explosion-proof valve of the battery is disposed on the end-part cover. Because the battery has a specific length, a high-temperature gas inside the battery is relatively far away from the explosion-proof valve, which is not conducive to rapid ejection of the high-temperature gas in the battery in thermal runaway for pressure relief. Additionally, the high-temperature gas ejected after thermal runaway of the battery has a risk of damaging surrounding components.

### SUMMARY

The present disclosure aims to solve at least one of technical problems existing in a conventional technology. To this end, the present disclosure provides a battery pack, and working safety can be improved through the battery pack.

The battery pack according to an embodiment of the present disclosure includes: a battery box, where the battery box has accommodation space, and an air exhaust passage is provided at a bottom of the battery box; battery cells, where the battery cells are disposed in the accommodation space, there are a plurality of battery cells, the plurality of battery cells are arranged in sequence in a length direction of the air exhaust passage, an explosion-proof valve is disposed at a bottom of the battery cell, and the explosion-proof valve corresponds to the air exhaust passage; and a mica protection plate, where the mica protection plate is disposed between the explosion-proof valve and the air exhaust passage.

The mica protection plate is disposed between the explosion-proof valve and the air exhaust passage. In this way, when a part of the plurality of battery cells experience thermal runaway, a mica protection plate on a battery cell not in thermal runaway can isolate a hot air flow from the battery cell not in runaway, on a premise of ensuring that the hot air flow quickly flows out of the explosion-proof valve and breaks through the mica protection plate to enter the air exhaust passage, so as to prevent the hot air flow from spreading to the battery cell not in thermal runaway and causing damage to the battery cell not in thermal runaway. In this way, safety of the battery pack can be improved.

According to some examples of the present disclosure, a weak portion is provided on the mica protection plate, the weak portion corresponds to the explosion-proof valve, and a projected area of the weak portion on a horizontal plane is larger than a projected area of the explosion-proof valve on the horizontal plane.

According to some examples of the present disclosure, weak portions are all extended in a width direction of the air exhaust passage, and a length of the weak portion is shorter than a width of the air exhaust passage.

According to some examples of the present disclosure, the mica protection plate is extended in the length direction of the air exhaust passage, and a length of the mica protection plate is longer than the width of the air exhaust passage.

According to some examples of the present disclosure, the mica protection plate is stamped with a stamped mark or a stamped slit, and the weak portion is located in a region, of the mica protection plate, corresponding to an inner circle of the stamped mark or the stamped slit.

According to some examples of the present disclosure, the battery cell is extended in the width direction of the air exhaust passage, and the explosion-proof valve is disposed in the middle in a length direction of the battery cell.

According to some examples of the present disclosure, the mica protection plate is disposed on the battery cell, and the mica protection plate and the battery cell are jointly mounted in the accommodation space; or the mica protection plate and the battery cell are disposed in the accommodation space in sequence.

According to some examples of the present disclosure, a battery cell fixing glue is provided at the bottom of the battery box at a position corresponding to an outer side of the mica protection plate, the battery cell is bonded and fastened to the battery cell fixing glue, and a height of the battery cell fixing glue does not exceed a height of the mica protection plate.

According to some examples of the present disclosure, a tray is disposed at the bottom of the battery box, and the tray is stamped to form the air exhaust passage; or the tray is at least partially bent to form the air exhaust passage.

According to some examples of the present disclosure, an air outlet is formed on the explosion-proof valve, an upper side of the air exhaust passage is open, and the air exhaust passage communicates with the air outlet.

According to some examples of the present disclosure, at least one end of the air exhaust passage in the length direction of the air exhaust passage is open.

According to some examples of the present disclosure, the battery pack further includes a cold plate. The tray is disposed at the bottom of the battery box, and the cold plate is disposed below a bottom of the tray.

According to some examples of the present disclosure, the battery pack further includes a cold plate. The tray is disposed at the bottom of the battery box, and the cold plate and the tray are integrally formed.

Additional aspects and advantages of the present disclosure will partially be given in the description below, and partially become clear from the description below, or be understood through the practice of the present disclosure.

### BRIEF DESCRIPTION OF DRAWINGS

The above and/or additional aspects and advantages of the present disclosure will become clear and easily understood from the description of embodiments with reference to the following accompanying drawings.
FIG. 1 is a partial diagram of a battery pack according to an embodiment of the present disclosure;
FIG. 2 is a partial diagram of a battery pack according to an embodiment of the present disclosure from another angle;
FIG. 3 is a diagram of a mica protection plate of a battery pack according to an embodiment of the present disclosure;
FIG. 4 is a diagram of a battery cell and an explosion-proof valve of a battery pack according to an embodiment of the present disclosure;
FIG. 5 is a diagram of a battery cell and a mica protection plate of a battery pack according to an embodiment of the present disclosure;
FIG. 6 is a diagram of a battery pack according to an embodiment of the present disclosure;
FIG. 7 is a diagram of a stamped mark provided on a mica protection plate of a battery pack according to an embodiment of the present disclosure; and
FIG. 8 is a diagram of a stamped slit provided on a mica protection plate of a battery pack according to an embodiment of the present disclosure.

Reference numerals:
100: battery pack;
10: tray; 11: air exhaust passage;
20: battery cell; 30: explosion-proof valve; 301: air outlet
40: mica protection plate; 41: weak portion;
42: stamped mark; 43: stamped slit;
50: battery cell fixing glue; 60: cold plate;
70: battery box; 701: accommodation space.

### DESCRIPTION OF EMBODIMENTS

Embodiments of the present disclosure are described in detail below. Embodiments described with reference to the accompanying drawings are exemplary. Embodiments of the present disclosure are described in detail below.

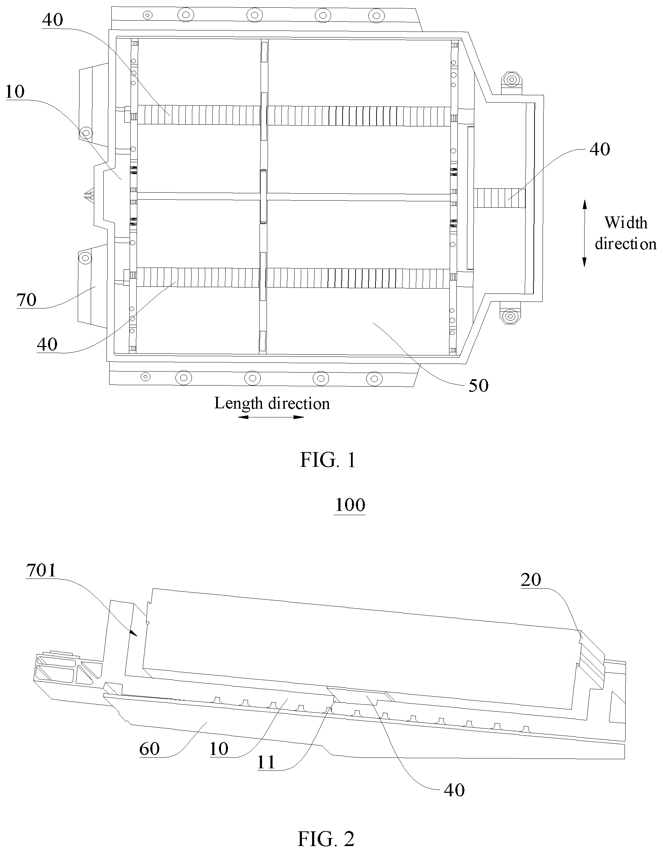

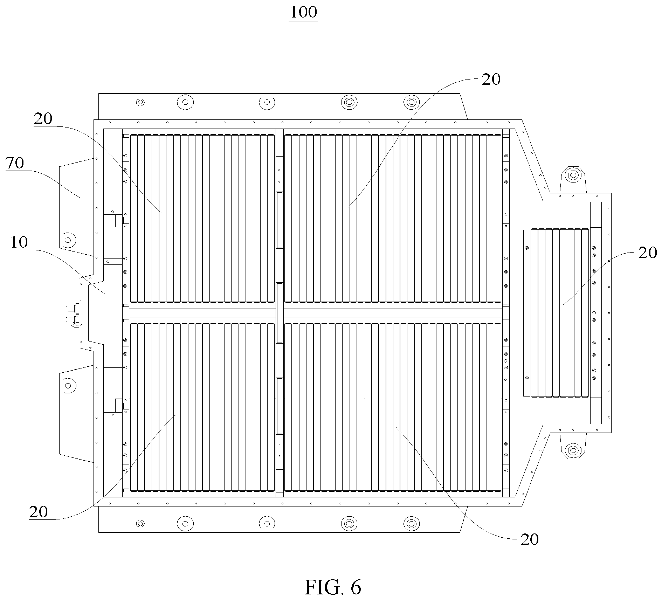

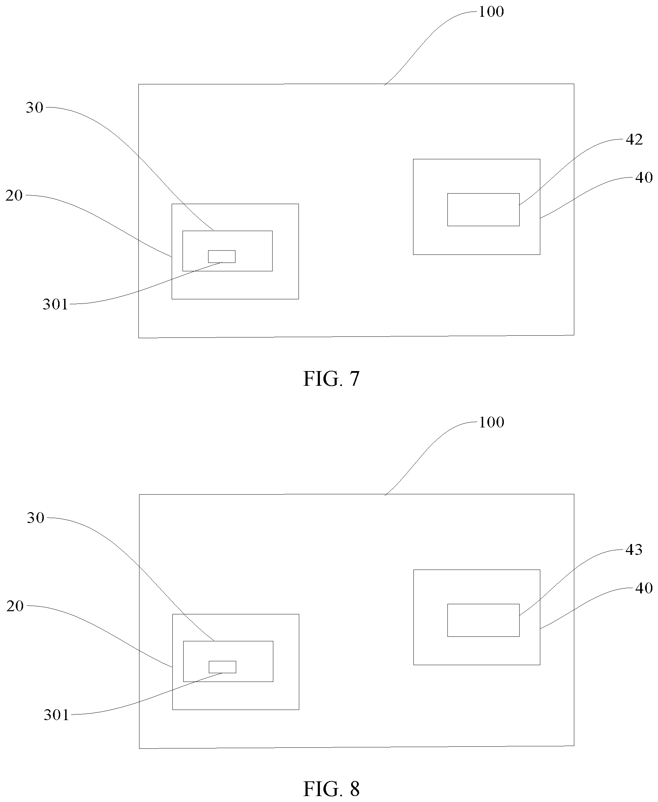

A battery pack 100 according to embodiments of the present disclosure is described below with reference to FIG. 1 to FIG. 8.

As shown in FIG. 1 to FIG. 8, the battery pack 100 according to the present disclosure may mainly include a battery box 70, battery cells 20, and a mica protection plate 40. The battery box 70, the battery cells 20, and the mica protection plate 40 jointly form the battery pack 100. The battery box 70 has accommodation space 701, and an air exhaust passage 11 is provided at a bottom of the battery box 70. A hot air flow existing when the battery pack 100 is in thermal runaway may be discharged through the air exhaust passage 11, so that the battery pack 100 quickly dissipates heat and cools down, to avoid thermal runaway caused by heat accumulation in the battery pack 100, and improve working safety of the battery pack 100.

Refer to FIG. 2. The battery cells 20 are disposed in the accommodation space 701. There are a plurality of battery cells 20, and the plurality of battery cells 20 are arranged in sequence in a length direction of the air exhaust passage 11. An explosion-proof valve 30 is disposed at a bottom of the battery cell 20, and the explosion-proof valve 30 corresponds to the air exhaust passage 11. In the description of the present disclosure, "a plurality of" means two or more. Specifically, the battery cells 20 are disposed in the accommodation space 701 of the battery box 70, so that it can be ensured that structural positions of the battery cells 20 in the battery pack 100 are stable and reliable. There are a plurality of battery cells 20, and the plurality of battery cells 20 are arranged in sequence in the length direction of the air exhaust passage 11, so that a battery capacity of the battery pack 100 can be increased, and a power supply capacity of the battery pack 100 is improved. The explosion-proof valve 30 is disposed at the bottom of the battery cell 20. The explosion-proof valve 30 serves as a pressure relief apparatus, so that the hot air flow inside the battery cell 20 can be discharged when the battery is in a thermal runaway state, and the hot air flow can be prevented from accumulating inside the battery cell 20 and causing the battery pack 100 to explode. Air is discharged downward through an air outlet 301 of the explosion-proof valve 30. The air exhaust passage 11 is located below the explosion-proof valve 30, and an upper side of the air exhaust passage 11 is open. The upper side of the air exhaust passage 11 corresponds to and communicates with the air outlet 301 of the explosion-proof valve 30. The hot air flow discharged from the explosion-proof valve 30 may flow directly to the air exhaust passage 11, so that the hot air flow can be discharged from the battery box 70 along the air exhaust passage 11.

Furthermore, the mica protection plate 40 is disposed between the explosion-proof valve 30 and the air exhaust passage 11. Specifically, the mica protection plate 40 has insulating properties and high-temperature resistance. When a part of the plurality of battery cells 20 experience thermal runaway, the hot air flow may quickly flow out of the explosion-proof valve 30 and break through the mica protection plate 40 to enter the air exhaust passage 11. Under this premise, a mica protection plate 40 on a battery cell 20 not in thermal runaway may isolate the hot air flow in the air exhaust passage 11 from the battery cell 20 not in runaway. That is, the mica protection plate 40 may seal the upper side of the air exhaust passage 11, so that the hot air flow in the air exhaust passage 11 can be prevented from flowing out of the upper side of the air exhaust passage 11 and spreading to the battery cell 20 not in thermal runaway, and causing thermal damage to the battery cell 20 not in thermal runaway. In this way, safety and reliability of the battery pack 100 can be improved.

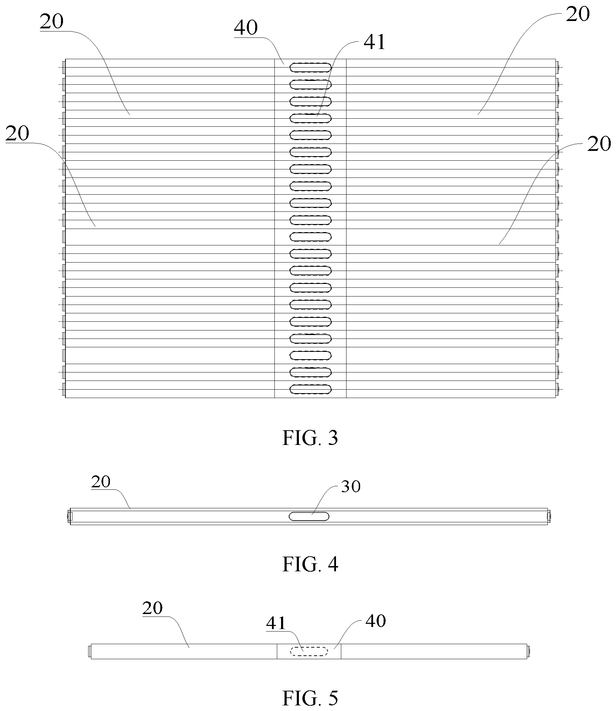

As shown in FIG. 4, FIG. 5, FIG. 7, and FIG. 8, a weak portion 41 is provided on the mica protection plate 40, the weak portion 41 corresponds to the explosion-proof valve 30, and a projected area of the weak portion 41 on a horizontal plane is larger than a projected area of the explosion-proof valve 30 on the horizontal plane. Specifically, the mica protection plate 40 is stamped with a stamped mark 42 or a stamped slit 43, so that the weak portion 41 can be formed in a region, of the mica protection plate 40, corresponding to an inner circle of the stamped mark 42 or the stamped slit 43. Through such an arrangement, connection strength between the weak portion 41 and a region, of the mica protection plate 40, corresponding to an outer circle of the stamped mark 42 or the stamped slit 43 is weak. The weak portion 41 corresponds to the air outlet 301 of the explosion-proof valve 30. When the hot air flow in the battery cell 20 rushes out of the explosion-proof valve 30, the hot air flow directly impacts the weak portion 41 of the mica protection plate 40, so that the weak portion 41 is directly and quickly disconnected from the region, of the mica protection plate 40, corresponding to the outer circle of the stamped mark 42 or the stamped slit 43. In this way, the hot air flow can pass through the mica protection plate 40 and flow into the air exhaust passage 11, and is discharged from the air exhaust passage 11 to dissipate heat.

In addition, the projected area of the weak portion 41 on the horizontal plane is set to be larger than the projected area of the explosion-proof valve 30 on the horizontal plane, so that all hot air flows flowing out of the explosion-proof valve 30 can directly impact the weak portion 41. This prevents obstruction of discharge of the hot air flow and reduction in discharge efficiency due to correspondence of a part of the hot air flows to another region on the mica protection plate 40. In this way, discharge efficiency of the hot air flow through the mica protection plate 40 can be improved.

As shown in FIG. 2 and FIG. 3, weak portions 41 are all extended in the width direction of the air exhaust passage 11, and a length of the weak portion 41 is shorter than the width of the air exhaust passage 11 Specifically, the weak portions 41 are all extended in the width direction of the air exhaust passage 11, and the length of the weak portion 41 is shorter than the width of the air exhaust passage 11. Such an arrangement can ensure that the length of the weak portion 41 does not exceed the width of the air exhaust passage 11. In this way, it can be ensured that the hot air flow in the battery cell 20 completely flows into the air exhaust passage 11 through the mica protection plate 40, and the hot air flow can be prevented from flowing to another region of the battery box 70, to ensure heat dissipation reliability of the battery pack 100.

As shown in FIG. 1 and FIG. 2, the mica protection plate 40 is extended in the length direction of the air exhaust passage 11, and a length of the mica protection plate 40 is longer than the width of the air exhaust passage 11. Specifically, the mica protection plate 40 is extended in the length direction of the air exhaust passage 11, so that it can be ensured that the weak portion 41 is extended in the length direction of the air exhaust passage 11, and it can be ensured that when an air flow in a single battery cell 20 breaks through the mica protection plate 40 and flows into the air exhaust passage 11, a plurality of other battery cells 20 are not affected by the air flow in the air exhaust passage 11. In this way, heat diffusion can be effectively prevented, and the plurality of other battery cells 20 can be protected from being affected by the hot air flow. The length of the mica protection plate 40 is longer than the width of the air exhaust passage 11, so that the mica protection plate 40 can completely cover the air exhaust passage 11, and the hot air flow can be effectively prevented from splashing out of the air exhaust passage 11. In an embodiment of the present disclosure, the length direction of the air exhaust passage 11 is also a length direction of the battery box 70 and an arrangement direction of the battery cells 20, and the length direction of the mica protection plate 40 and the length direction of the battery cell 20 are set in the width direction of the air exhaust passage 11.

As shown in FIG. 2 and FIG. 4, the battery cell 20 is extended in the width direction of the air exhaust passage 11, and the explosion-proof valve 30 is disposed in the middle in the length direction of the battery cell 20. Specifically, the battery cell 20 is extended in the width direction of the air exhaust passage 11, so that the air exhaust passage 11 can perform air discharge for a plurality of battery cells 20 at the same time. This can improve air discharge efficiency of the battery pack 100, and can also improve structural compactness of the battery pack 100. The explosion-proof valve 30 is disposed in the middle in the length direction of the battery cell 20, so that the hot air flow in the battery cell 20 can be discharged from the middle of the battery cell 20. This can improve heat exhaust efficiency of the battery cell 20, and can also improve heat dissipation uniformity of the battery cell 20, so that heat dissipation effect of the battery pack 100 can be better, and safety of the battery pack 100 can be improved.

According to an embodiment of the present disclosure, as shown in FIG. 5, the mica protection plate 40 is disposed on the battery cell 20, and is mounted together with the battery cell 20 in the accommodation space 701. Alternatively, the mica protection plate 40 and the battery cell 20 are disposed in the accommodation space 701 in sequence. Specifically, when the battery pack 100 is assembled, the mica protection plate 40 and the battery cell 20 may be fastened first. Then, the mica protection plate 40 and the battery cell 20 may be fastened to the bottom of the battery box 70 as a whole. Alternatively, the mica protection plate 40 may be fastened to the bottom of the battery box 70 first to ensure that the weak portion 41 corresponds to the air exhaust passage 11. Then, the battery cell 20 is mounted on the mica protection plate 40. Such an arrangement can improve assembly freedom of the battery pack 100 and improve assembly efficiency of the battery pack 100.

According to an embodiment of the present disclosure, the mica protection plate 40 and the battery cell 20 are disposed in the accommodation space 701 in sequence. A battery cell fixing glue 50 is provided at the bottom of the battery box 70 at a position corresponding to an outer side of the mica protection plate 40, the battery cell 20 is bonded and fastened to the battery cell fixing glue 50, and a height of the battery cell fixing glue 50 does not exceed a height of the mica protection plate 40. Specifically, the mica protection plate 40 and the battery cell 20 are disposed in the accommodation space 701 in sequence, the battery cell fixing glue 50 is provided at the bottom of the battery box 70 at the position corresponding to the outer side of the mica protection plate 40, and the battery cell 20 is bonded and fastened to the battery cell fixing glue 50. This can ensure that a position of the battery cell 20 in the battery pack 100 is stable and firm, and can ensure that the explosion-proof valve 30 and the air exhaust passage 11 constantly correspond to each other, so that heat dissipation reliability of the battery pack 100 can be improved. The height of the battery cell fixing glue 50 does not exceed the height of the mica protection plate 40. This can prevent the battery cell fixing glue 50 from covering a range of the weak portion 41, so that heat dissipation reliability of the battery pack 100 can be ensured. It should also be noted that the battery cell fixing glue 50 may not be provided between the mica protection plate 40 and the bottom of the battery box 70.

According to an embodiment of the present disclosure, a tray 10 is disposed at the bottom of the battery box 70, and the tray 10 is stamped to form the air exhaust passage 11; or the tray 10 is at least partially bent to form the air exhaust passage 11. Specifically, the air exhaust passage 11 is in a shape of a downwardly sunken groove in the tray 10, and the upper side of the air exhaust passage 11 is open and communicates with the air outlet 301 of the explosion-proof valve 30, so that the hot air flow in the battery cell 20 directly enters the air exhaust passage 11 after flowing out of the air outlet 301 of the explosion-proof valve 30. At least one end of the air exhaust passage 11 in the length direction of the air exhaust passage 11 is open. This can ensure that the hot air flow is smoothly discharged from the air exhaust passage 11 after entering the air exhaust passage 11. The tray 10 is stamped or bent to form the air exhaust passage 11. Such an arrangement can make a processing technology of the air exhaust passage 11 simple with a low precision requirement, and facilitate production of the tray 10. In addition, such an arrangement can enable the air exhaust passage 11 to be integrally formed on the tray 10, so that structural stability of the air exhaust passage 11 can be improved, and heat dissipation effect of the battery pack 100 can be ensured.

As shown in FIG. 2, the battery pack 100 further includes a cold plate 60. The tray 10 is disposed at the bottom of the battery box 70. The cold plate 60 is disposed below a bottom of the tray 10. When the hot air flow in the battery cell 20 is ejected into the air exhaust passage 11 through the explosion-proof valve 30, the cold plate 60 can absorb a large amount of heat emitted by the exhaust tray 10, accelerate a cooling speed of the battery pack 100, and ensure that heat dissipation performance of the battery pack 100 is stable and reliable.

According to an embodiment of the present disclosure, the battery pack 100 further includes a cold plate 60. The tray 10 is disposed at the bottom of the battery box 70. The cold plate 60 and the tray 10 are integrally formed. Such an arrangement can improve a heat dissipation capacity of the tray 10. When the hot air flow in the battery cell 20 is ejected into the air exhaust passage 11 through the explosion-proof valve 30, the cold plate 60 can accelerate a cooling speed of the battery pack 100, and ensure that heat dissipation performance of the battery pack 100 is stable and reliable. In addition, such an arrangement can improve structural compactness of the battery pack 100, which is conducive to improving energy density of the battery pack 100.

In the description of the present disclosure, it should be understood that an orientation or positional relationship indicated by the term "center", "longitudinal", "transverse", "length", "width", "thickness", "upper", "lower", "front", " back", "left", "right", "vertical", "horizontal", "top", "bottom", "internal", "external", "clockwise", "counterclockwise", "axial direction", "radial direction", "circumferential direction", or the like is based on an orientation or positional relationship shown in the accompanying drawings, and is merely for ease of describing the present disclosure and simplifying the description, but does not indicate or imply that an apparatus or an element referred to must have a specific orientation or be constructed and operated in a specific orientation, and therefore cannot be understood as a limitation on the present disclosure.

In the description of this specification, reference to the terms "one embodiment", "some embodiments", "illustrative embodiment", "example", "specific example", or "some examples" means that the specific features, structures, materials or characteristics described with reference to the embodiment or example are included in at least one embodiment or example of the present disclosure. In this specification, illustrative expressions of these terms do not necessarily refer to the same embodiment or example.

Although embodiments of the present disclosure have been shown and described, a person skilled in the art may understand that various changes, modifications, substitutions and variations may be made to embodiments without departing from the principles and spirit of the present disclosure, and that the scope of the present disclosure is defined by the claims and their equivalents.

## Claims

1. A battery pack (100), comprising:
a battery box (70), wherein the battery box (70) has accommodation space (701), and an air exhaust passage (11) is provided at a bottom of the battery box (70);
battery cells (20), wherein the battery cells (20) are disposed in the accommodation space (701), there are a plurality of battery cells (20), the plurality of battery cells (20) are arranged in sequence in a length direction of the air exhaust passage (11), an explosion-proof valve (30) is disposed at a bottom of the battery cell (20), and the explosion-proof valve (30) corresponds to the air exhaust passage (11); and
a mica protection plate (40), wherein the mica protection plate (40) is disposed between the explosion-proof valve (30) and the air exhaust passage (11).

2. The battery pack (100) according to claim 1, wherein a weak portion (41) is provided on the mica protection plate (40), the weak portion (41) corresponds to the explosion-proof valve (30), and a projected area of the weak portion (41) on a horizontal plane is larger than a projected area of the explosion-proof valve (30) on the horizontal plane.

3. The battery pack (100) according to claim 2, wherein the weak portion (41) is extended in a width direction of the air exhaust passage (11), and a length of the weak portion (41) is shorter than a width of the air exhaust passage (11).

4. The battery pack (100) according to claim 3, wherein the mica protection plate (40) is extended in the length direction of the air exhaust passage (11), and a length of the mica protection plate (40) is longer than the width of the air exhaust passage (11).

5. The battery pack (100) according to any one of claims 2 to 4, wherein the mica protection plate (40) is stamped with a stamped mark (42) or a stamped slit (43), and the weak portion (41) is located in a region, of the mica protection plate (40), corresponding to an inner circle of the stamped mark or the stamped slit.

6. The battery pack (100) according to any one of claims 1 to 5, wherein the battery cell (20) is extended in the width direction of the air exhaust passage (11), and the explosion-proof valve (30) is disposed in the middle in a length direction of the battery cell (20).

7. The battery pack (100) according to any one of claims 1 to 6, wherein the mica protection plate (40) is disposed on the battery cell (20), and the mica protection plate (40) and the battery cell (20) are jointly mounted in the accommodation space (701); or
the mica protection plate (40) and the battery cell (20) are disposed in the accommodation space (701) in sequence.

8. The battery pack (100) according to any one of claims 1 to 6, wherein a battery cell fixing glue (50) is provided at the bottom of the battery box (70) at a position corresponding to an outer side of the mica protection plate (40), the battery cell (20) is bonded and fastened to the battery cell fixing glue (50), and a height of the battery cell fixing glue (50) does not exceed a height of the mica protection plate (40).

9. The battery pack (100) according to any one of claims 1 to 8, wherein a tray (10) is disposed at the bottom of the battery box (70), and the tray (10) is stamped to form the air exhaust passage (11); or the tray (10) is at least partially bent to form the air exhaust passage (11).

10. The battery pack (100) according to any one of claims 1 to 9, wherein an air outlet (301) is formed on the explosion-proof valve (30), an upper side of the air exhaust passage (11) is open, and the air exhaust passage (11) communicates with the air outlet (301).

11. The battery pack (100) according to any one of claims 1 to 10, wherein at least one end of the air exhaust passage (11) in the length direction of the air exhaust passage (11) is open.

12. The battery pack (100) according to any one of claims 1 to 11, further comprising a cold plate (60), wherein the tray (10) is disposed at the bottom of the battery box (70), and the cold plate (60) is disposed below a bottom of the tray (10).

13. The battery pack (100) according to any one of claims 1 to 11, further comprising a cold plate (60), wherein the tray (10) is disposed at the bottom of the battery box (70), and the cold plate (60) and the tray (10) are integrally formed.
